# EUROPEAN PATENT APPLICATION

(11) **EP 0 679 341 A1**
(43) Date of publication of application: **02.11.1995**
(21) Application number: 95200865.4
(22) Date of filing: 05.04.1995
(51) Int. Cl.: A23L 1/36, A23P 1/08, A23L 1/176, A23L 1/27, A23L 1/164

(54) **Method for preparing decorated snack products and method for preparing colored wafer, oat and rice flakes**

(30) Priority: 05.04.1994 NL 9400536
(71) Applicant: SARA LEE/DE N.V., NL-3522 AA Utrecht (NL)
(72) Inventor: Visbeen, Joseph F. M., NL-1562 SN Krommenie (NL); Plantinga, Willem J., NL-3992 BD Houten (NL); Essens, Paulus J. M., NL-3524 JT Utrecht (NL); van Aken, Petronella M. M., NL-3571 GK Utrecht (NL); Kreuning, Johannes, NL-1212 BC Hilversum (NL)
(74) Representative: Smulders, Theodorus A.H.J., Ir.

(57) **Abstract**

The invention relates to a method for preparing decorated snack products which comprises the coating of a core with at least one layer of a dough material, followed by the heating thereof. In accordance with the invention, the dough material is provided with colored wafer flakes, colored oat flakes and/or colored rice flakes. In particular, the core that is at least partly coated with the at least one layer is sprinkled, before being heated, with the colored wafer flakes, colored oat flakes and/or colored rice flakes.

## Description

The invention relates to a method for preparing decorated snack products which comprises the coating of a core with at least one layer of a dough material, followed by the heating thereof.

It is known to prepare many types of snack products on the basis of nuts and the like, with a coating being provided on the nuts when prepared. Such products consist of a core of, for instance, a peanut and a covering of one or more layers of dough. If desired, flavoring substances can further be provided in the dough, such as salt, herbs, flavors and the like.

The object of the invention is to provide a method of a new type of snack product having a more attractive appearance to the consumer.

The method according to the invention is based on the fact that the dough material is provided with colored wafer flakes, colored oat flakes and/or colored rice flakes. In this connection, by colored wafer flakes, colored oat flakes and/or colored rice flakes is meant colored wafer flakes and/or colored oat flakes and/or colored rice flakes. More in particular, prior to the heating thereof, the core that is at least partly coated with the at least one layer is sprinkled with colored wafer flakes, colored oat flakes and/or colored rice flakes.

In the past, attempts have been made to give coated nuts a colorful appearance by providing their outsides, prior to deep-frying, with colored herbs, vegetables or other colored natural products, for instance red or green pieces of paprika. It appears that due to this heat treatment, these parts color dark brown to black during deep-frying, causing the intended effect to be lost.

With the method according to the invention, a type of coated nuts and the like is obtained that could be referred to as decorated nibbling nuts. For instance, if a mixture of red and green flakes is used, coated nuts are formed whose outsides are apparently provided with pieces of red and green paprika. The colored wafer, oat and/or rice flakes have the property that they do not discolor, not even when subjected to a high temperature. Hence, the heat treatment which the snacks undergo when prepared has no negative influence on the appearance of the flakes.

A particularly great advantage of the method according to the invention is that for instance the colored wafer flakes are freely commercially available. Consequently, a manufacturer of snacks need not make any extra investments for the manufacture of such colored flakes. Accordingly, the further preparation of the snack can be carried out on existing equipment for producing snacks without the colored wafer, oat and/or rice flakes, as will be further explained hereinafter.

Colored wafer flakes are freely commercially available from Primus Ouwelfabriek B.V.

Rice flakes are rice grains that are crushed after steaming and subsequently dried.

Coating can take place in many ways.

In accordance with a particular aspect of the invention, the dough material is supplied to the core in the form of sprinkling flour, with the colored wafer flakes and/or colored rice flakes being supplied when the last 3-15 percent of the sprinkling flour is supplied.

In accordance with another variant of the method according to the invention, successively a first amount of sprinkling flour that forms the dough material is supplied to the core to be coated, and after the supply of sprinkling flour has stopped the colored wafer flakes and/or colored rice flakes are supplied, whereupon a final amount of sprinkling flour is subsequently supplied.

During the supply of the sprinkling flour, liquid is preferably supplied to produce a doughy substance readily capable of bonding to the core.

For this, a method can for instance successfully be used wherein the core is dredged in a dredging drum by effecting the contact between the core and the sprinkling flour in the rotating dredging drum. When the core is a peanut, it can be coated in husked as well as unhusked form.

In particular, the dough material comprises starch and flavoring and/or coloring substances. The dough material can further comprise modified starch. The flavoring and/or coloring substances can for instance be incorporated into the liquid that is added to the sprinkling flour. In this manner, a dough material of the desired color and flavor is for instance obtained during dredging or by means of another process suitable for that purpose.

The flavoring and/or coloring substances may for instance comprise sugar, salt, flavors and/or a spice extract.

In accordance with a possible method according to the invention, the flakes supplied are moist and may or may not have gum provided thereon. This variant can be used when the flakes are prepared directly before the snack is prepared.

Possible methods for preparing colored wafer and rice flakes will be discussed hereinafter. However, if colored wafer flakes are used, which are freely commercially available, these flakes will commonly not be moist when sprinkled on the surface of a core that is at least partly coated with dough material as discussed hereinabove.

Preferably, the coated core is heated by deep-frying it in fat. However, it is also possible to heat the coated core in an oven. This involves the coated core preferably being heated to a temperature ranging between 125 and 225 degrees centigrade.

The amount of flakes supplied, based on dry substance, is for instance equal to 0.5-2.5 percent by weight of the supplied amount of dough material. In particular, the amount of the supplied flakes and dough material together, based on dry substance, is equal to 60-140 percent by weight of the amount of cores to be coated.

In accordance with an attractive variant of the invention, the wafer flakes and/or rice flakes have mutually different colors. The wafer flakes and/or rice flakes have a largest diameter of for instance 0.2-5 mm, however preferably 2-3 mm.

A method for preparing colored rice, oat or wafer flakes that can be used in a method as described hereinabove is characterized in that the uncolored, i.e. natural flakes are introduced into an aqueous solution provided with coloring substance and are subsequently removed from the solution. The flakes have then been impregnated with the colored liquid and are moreover still moist.

If desired, these flakes can directly be used in a method for preparing decorated snacks as described hereinabove. However, it is also possible to dry the wafer, oat and/or rice flakes to enable them to be used for this method at a later time.

When the colored flakes are prepared, they are preferably mixed in a liquid for instance by stirring in the liquid.

### Example

Approximately 40 kg of peanuts is introduced into a dredging drum. With this, 32 kg of sprinkling flour, consisting of 30 kg of starch and 2 kg of modified starch, is dredged with simultaneous addition of 25 kg of sprinkling liquid. When approximately 95 percent of the 32 kg of sprinkling flour has been added, 0.5 kg of colored wafer flakes is moreover added. In this example, the wafer flakes are added simultaneously with the last, approximately 5 percent, sprinkling flour to be added. The wafer flakes consist of a collection of red and green wafer flakes. The flakes have a largest diameter of 2-3 mm.

The sprinkling liquid comprises 2 kg of salt, 2 kg of sugar, 2 kg of flavors and 0.1 kg of coloring substances and 19 kg of water.

After dredging for some time, the resulting semi-finished product was deep-fried in deep-frying oil for 8 minutes at 160 degrees centigrade. The resulting finished product comprised a pretty surface in which red and green particles, resembling paprika or herbs, were embedded. The final product is composed of approximately 48 percent (by weight) peanuts, 35 percent starch, 10 percent vegetable oil, 1.5 percent sugar, 1.5 percent modified starch, 1.5 percent salt, 1.6 percent flavors, 0.3 percent spice extract and 0.6 percent colored wafer flakes.

## Claims

1. A method for preparing decorated snack products which comprises the coating of a core with at least one layer of a dough material, followed by the heating thereof, characterized in that the dough material is provided with colored wafer flakes, colored oat flakes and/or colored rice flakes.

2. A method according to claim 1, characterized in that prior to the heating thereof, the core that is at least partly coated with the at least one layer is sprinkled with the colored wafer flakes, colored oat flakes and/or colored rice flakes.

3. A method according to claim 2, characterized in that the dough material is supplied to the core in the form of sprinkling flour, with the colored wafer flakes, colored oat flakes and/or colored rice flakes being supplied during the supply of the last 3-15 percent of the sprinkling flour.

4. A method according to claim 2, characterized in that successively a first amount of sprinkling flour, to form the dough material, is supplied to the core to be coated, and after the supply of the sprinkling flour has stopped the colored wafer flakes, colored oat flakes and/or colored rice flakes are supplied, whereupon a final amount of sprinkling flour is subsequently supplied.

5. A method according to claim 1, 2 or 3, characterized in that liquid is supplied during the supply of the sprinkling flour.

6. A method according to any one of the preceding claims, characterized in that the dough material comprises starch and flavoring and/or coloring substances.

7. A method according to claim 6, characterized in that the dough material further comprises modified starch.

8. A method according to claim 6 or 7, characterized in that the flavoring and/or coloring substances comprise sugar, salt, flavors and/or at least one spice extract.

9. A method according to any one of the preceding claims, characterized in that the flakes supplied are moist and have gum provided thereon.

10. A method according to any one of the preceding claims, characterized in that the coated core is heated by deep-frying it in fat.

11. A method according to any one of the preceding claims, characterized in that the coated core is heated to a temperature ranging between 125 and 225 degrees centigrade.

12. A method according to any one of the preceding claims, characterized in that the amount of flakes supplied, based on dry substance, is equal to 0.5-2.5 percent by weight of the supplied amount of dough material.

13. A method according to any one of the preceding claims, characterized in that the supplied amount of flakes and dough material together, based on dry substance, is equal to 60-140 percent by weight of the amount of cores to be coated.

14. A method according to any one of the preceding claims, characterized in that the wafer flakes, oat flakes and/or rice flakes have mutually different colors.

15. A method for preparing colored rice, oat or wafer flakes that can be used in the method according to any one of the preceding claims, characterized in that the uncolored flakes are introduced into an aqueous solution with or without gum and provided with coloring substance, and are subsequently removed from the solution.

16. A method according to claim 15, characterized in that the flakes, after having been removed from the colored aqueous solution, are dried.

17. A snack product obtainable by the use of the method according to any one of claims 1-14.

18. Colored rice flakes obtainable by the use of the method according to claim 15 or 16.

19. Colored wafer flakes obtainable by the use of the method according to claim 15 or 16.

20. Colored oat flakes obtainable by the use of the method according to claim 15 or 16.
